# EUROPEAN PATENT SPECIFICATION

(11) **EP 0 393 079 B1**
(45) Date of publication and mention of the grant of the patent: **13.04.1994**
(21) Application number: 88909678.0
(22) Date of filing: 17.09.1988
(51) Int. Cl.: C01B 13/11, B01J 19/08

(54) **ELECTRICAL DEVICE FOR CONVERSION OF MOLECULAR WEIGHTS**
ELEKTRISCHE ANORDNUNG ZUR UMWANDLUNG MOLEKULARER GEWICHTE
DISPOSITIF ELECTRIQUE POUR LA CONVERSION DE POIDS MOLECULAIRES

(30) Priority: 28.09.1987 US 102361
(43) Date of publication of application: 24.10.1990
(73) Proprietor: UNIVERSITY OF ALASKA, Fairbanks, Alaska 99775-1720 (US)
(72) Inventor: Sackinger, William M., College, AK 99708 (US)
(74) Representative: Hegner, Mogens
(86) International application number: US8803228
(87) International publication number: WO8902868

(56) References cited:
- US-A- 919 445
- US-A- 1 010 777
- US-A- 1 037 500
- US-A- 2 093 619
- US-A- 2 710 835
- US-A- 3 260 876
- US-A- 3 565 776
- US-A- 3 677 931
- US-A- 3 842 286
- US-A- 3 942 020
- US-A- 4 214 995
- US-A- 4 690 803
- US-A- 4 693 870

## Description

### BACKGROUND OF THE INVENTION

### 1. Field of the Invention

The present invention relates to the conversion of the size of hydrocarbon molecules in a process stream, using an electrical method, and can be used either to combine small molecules into larger molecules or to separate larger molecules into smaller molecules.

### 2. Description of Prior Art

In the petroleum process industries, for many decades a thermal separation process has been applied to crude oil, which is a mixture of hydrocarbons, to separate out various fractions which are subsequently used for specific purposes. For example, diesel fuel, gasoline, lubricating oils, and asphalts are separated by vaporization and subsequent condensation at appropriate different temperatures and heights in a tower. The resulting yields of refined products are dependent upon the characteristics of the crude oil supplied, which will be different for each petroleum reservoir. The market demand for each category of refined products is variable in time, and therefore the adjustment of the petroleum refining process to changes in input composition and output demand can be difficult and challenging.

One remedy which has been recognized for many years is to convert larger molecules into smaller ones, a process called cracking, which has been normally accomplished by catalytic action on special surfaces at high temperatures. In this way, for example, an extra quantity of heavy oils can be converted into gasoline, which may be more marketable. Limitations of this approach include the cost of catalysts, the range of input molecules for which they are effective, and the thermal energy required for the process, which is difficult to recover.

On the other hand, the world supply of liquid hydrocarbons is also being consumed, and within only a few decades the known reserves will be exhausted. Two obvious alternatives involve the utilization of other natural sources of hydrocarbons which are in abundant supply: natural gas, and heavy oil. Keeping in mind that the majority of uses of petroleum in equipment use in our era have been for fuels in liquid form (such as gasoline, diesel fuel, jet fuel, and the like), and the transport of liquid fuel at normal atmospheric temperature and pressure is a decided advantage and has been designed into equipment in use today, it is clear that an important advantage would be derived from methods to convert natural gas (typically methane and ethane, CH₄ and C₂H₆) into liquids (C₄Hₓ to C₁₀H_{y}, for example). Natural gas is easily withdrawn from reservoirs, and, if converted into higher molecular weight species, could readily be transported from remote source locations to consumers via existing liquid petroleum pipelines or ships, whereas in it's natural gaseous form or refrigerated liquid form, special-purpose pipelines and ships must be constructed, and the use of natural gas as a vehicle fuel by the consumer would require substantial investment in new equipment on vehicles. A process has in fact been built and operated commercially by the New Zealand government which produces some 14,450 barrels of gasoline per day using natural gas as a feedstock. It is a three stage process; the first producing hydrogen and carbon monoxide, the second producing methanol, and the third producing gasoline via the Mobil MTG (methanol-to-gasoline) process which uses a synthetic zeolite catalyst ZSM-5 (U.S. Patent No. 3,702,886, Argauer and Landolt). The incorporation of zeolites into various reactor geometries is considered in U.S. Patents No. 4,058,576 (Chang and Grover), No. 3,928,483 (Chang, Silvestri, and Smith), No. 3,931,349 (Kuo), No. 4,138,440 (Chang, Jacob, Silvestri, and Zahner), No. 4,197,418 (Lee and Yurchak), No. 4,046,825 (Owen and Venuto), and No. 4,251,484 (Daviduk and Haddad). Two difficulties with all of the processes based upon these patents are, firstly, that a multi-stage conversion process from natural gas to gasoline is involved, and, secondly, that high operating temperatures are involved (315 degrees C to 450 degrees C). Both difficulties lead to loss of energy and to high cost of initial equipment. An approach which involves a single-stage direct conversion, and in which the energy which is to be supplied to the reaction is specifically used to accomplish the molecular conversion, with a minimum waste as heat, would represent an improvement. Furthermore, the MTG process is limited as to the size of large molecules which may be formed, by the interior dimensions of the columns of the synthetic zeolite molecule. A process which allows the combination of molecules with virtually unlimited larger sizes would have additional uses in the production of lubricating oils and heavier fluids. The principle of molecular conversion thus has wide application.

Although the foregoing discussion of molecular conversion is oriented towards hydrocarbon gaseous-to-liquid conversion, it is obvious that compound gases containing other elements, such as oxygen, chlorine, flourine, bromine, nitrogen, sulfur, hydrogen, silicon, and other elements could be changed in composition in order to accomplish certain benefits, such as the diminution of toxicity prior to release into the natural environment, or the alteration of composition so as to render harmful gases into harmless liquids or gases prior to release into the environment. The chloroflourocarbon gases, for example, which interact with naturally-available ultraviolet radiation when they are present in the atmosphere, could be transformed into liquid forms in combination with other elements which would be relatively harmless.

### SUMMARY OF THE INVENTION

Accordingly, it is the object of this invention to provide an electrical device which will accomplish the function of combining molecules of low molecular weight into molecules of higher molecular weight.

A further object of the invention is to provide an electrical device for separating molecules of higher molecular weight into other molecules of lower molecular weight.

Moreover, an additional object of the invention is to provide an electrical device for combining two or more different molecular species into new molecular species.

In a first aspect these objects are fulfilled according to the invention by providing an apparatus for converting a gas containing molecules having a first molecular weight into a gas containing molecules having a second molecular weight of the kind defined in the precharacterizing portion of claim 1 and characterized by the features of the characterizing portion of claim 1.

Briefly, the present invention consists of a plurality of tubes, made of glass or ceramic, which have electrically semi-conductive inner walls. By applying a voltage from one end of this array of tubes to the opposite end, an electric field is established which is parallel with the interior surfaces. A weak source of electrons is located at or just outside of the negatively-connected side of the array, and these electrons are accelerated along the interior regions of the tubes, eventually striking the walls with energies which may range from several electron volts to more than a hundred electron volts. For electron flow, gas pressures less than 133.3 Pa (1 Torr) are usually used, although operation at pressures several orders of magnitude higher is possible if volume electron/ion interaction effects are to be used as a supplemental improvement in operation. The gas which is to be converted is admitted into the chamber on the side of the tubular array which is opposite the electron source. Diffusion of the source gas into the tubular array takes place, with absorbtion of the gas molecules on the interior walls of the tube. Upon grazing impact of the electrons upon the interior walls of the tube, several processes take place, the most obvious of which is the disruption of molecular bonding of the absorbed gas. In the case of methane source gas, a hydrogen ion is created, H⁺, which immediately is separated from its parent molecule by the action of the electric field. Hydrogen ions thus created are accelerated along the tube towards the negative end, striking the walls along the way and, upon impact, disrupting the bonding of the methane molecules and, as well, serving as an additional electron source via ion-induced secondary electron emission. The impact of electrons also creates secondary electron emission, with a net gain in electron flux along the length of the tube. Furthermore, once methane molecules are stripped of one or more hydrogen atoms, they have a net negative charge which, if they have been released from the wall surface by the energy associated with electron impact, causes them to be accelerated back towards the positive end of the tube. In such a state of activation, they will bond readily to other similar species upon collision with them, and the formation of carbon-carbon bonds is probable. Thus, by the repeated application of this process, formation of higher-order mixtures of paraffins, aromatics, olefins, and polyenes takes place, and a physical separation of the available hydrogen from the newly-formed higher-order hydrocarbon products is made possible by the electric field. Charge exchange is possible because of the flow of electrons through space, and the flow of electrical current through the semiconducting substrate. Energy for the dissociation is provided by the electric field which accelerates electrons, hydrogen ions, and complex hydrocarbon ions. Energy transfer is by direct impact at the interior surfaces of the tubes; volume interaction effects also take place at higher pressures, with similar results. Both chemi-absorbed molecules and physically absorbed molecules at the surface are affected and transformed by the electron impact process. The higher-order molecules are electrically moved to the region of higher inlet gas pressure, where they are carried by the inlet gas pressure gradient laterally to an outlet stream. A condensation stage then removes the higher-order species and the methane is recirculated through the device. The same device, if operated in a high electron flux mode, could decompose higher-order hydrocarbon molecules deposited on the walls of the tube near the output end, and a separate collecting electrode held at a greater positive voltage would attract such fragments. In this mode, lower molecular weight species could be produced from large molecules. It is clear that the admission of gaseous mixtures into this apparatus would result in a variety of output compounds, with a very large number of possibilities which could be considered, among which the detoxification of certain gases or liquids could take place. It is also clear that the hydrogen ions emerging from the negative-polarity ends of the tubes could be used to fragment large-molecular-weight hydrocarbon molecules in either a surface interaction or a volume interaction, and could combine with the fragments so that molecules of medium weight ( for example C₃Hₓ to C₁₀H_{y} ) would be formed. Even pure carbon ( such as coal ) could be gasified in this way and the resulting hydrocarbons pumped away.

Further, in a second aspect, these objects are fulfilled by providing a method for conversion of a first substance having a first molecular weight into a second substance having a second molecular weight as defined in claim 16.

### BRIEF DESCRIPTION OF THE DRAWINGS

Fig.1. is a section view of a simplified reaction chamber.

Fig.2. is an end section view of part of the parallel array of tubes.

Fig.3. is a section view of one such tube.

Fig.4. is a section view of one such tube with an angle between electric field and tube axis.

Fig.5. is a section view of an axial-flow reaction chamber with quad-symmetric tube mounting.

Fig.6. is an end section view of part of the reaction chamber of Fig.5.

### DESCRIPTION OF THE PREFERRED EMBODIMENTS

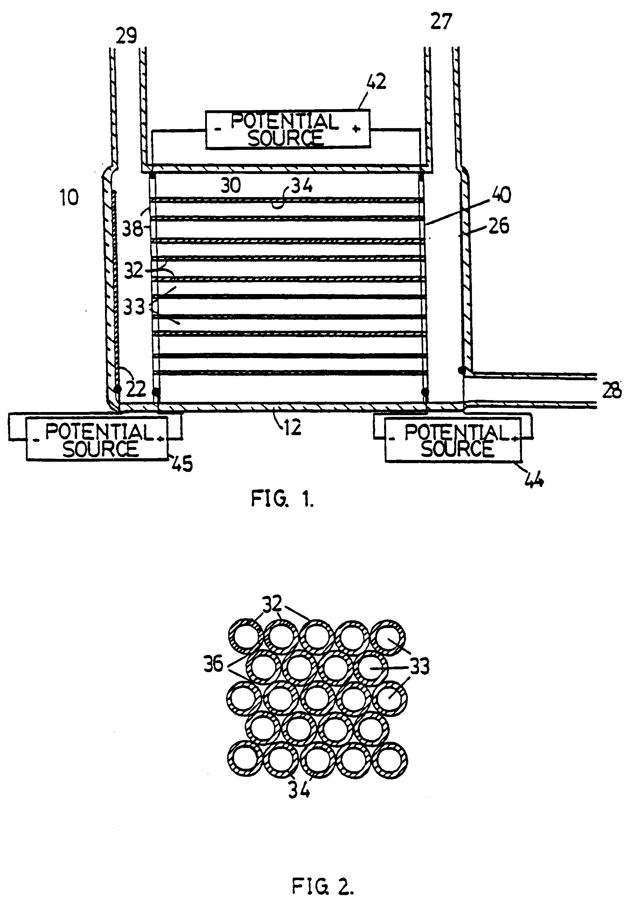

Referring now to the drawings and in particular to Figure 1, there is shown an electrical device 10 for conversion of hydrocarbon molecular weights, comprising a chamber 12 with walls constructed of glass, ceramic, or metal, with an inlet gas source 27, an outlet gas port 28, and a hydrogen outlet gas port 29. Disposed upon or near the inside wall of chamber 12 is an electrode 26 constructed of metal, and on the opposite side of chamber 12 is another electrode 22 constructed of metal or a suitable semiconducting material, which can serve as an electron source. Within the central part of chamber 12 is mounted a plurality 30 of tubular elements 32 which are joined together along their outer boundaries in an array so that the axis of each tubular element 32 is disposed parallel with each other. The tubular elements 32 are composed of appropriate glass, glass ceramic, or ceramic, and are bound together by direct fusion of their boundaries 36 as shown in Figure 2, or may also be bound together by means of a lower-softening-point glass applied at the boundaries 36. The interior of the tubes 32 are open cylinders 33 with interior surfaces 34 which have secondary-electron-emitting properties, and which have a zone of semiconducting material disposed just beneath the surfaces 34. Details of construction as described in U.S. Patent No. 3,260,876 (Manley et.al.) could be used, for example. The plurality 30 of tubular elements is coated with metallic electrode material 38 and 40 such as gold, nickel, or aluminum on the faces 38 and 40, with the open cylinders 33 penetrating the metallic electrode material. Three potential sources are required, source 42 being connected between the faces 38 and 40 of the plurality 30 of tubular elements, source 44 being connected from electrode 40 to electrode 26, and source 45 being connected from electrode 22 to electrode 38. Connection of these sources through a glass or ceramic chamber 12 is shown, whereas if a metallic chamber wall is used, separate insulative feed-through connections through the chamber wall would be required.

Briefly describing the operation of the device in the mode which increases hydrocarbon molecular weights, the input gas such as methane CH₄ or ethane C₂H₆ is admitted through port 27 into the chamber 10, with an ambient pressure of 133.3 x 10⁻⁶ to 133.3 Pa (10⁻⁶ to 1 Torr), for example. Diffusion of the gas into tubes 32 occurs, with some of the gas absorbing on the interior walls 34. Electrons originating either from the electron source 22, or from field emission from the edges of the metallic coating on face 38, or from cosmic rays, photoemission, or other natural sources, are accelerated along the length of the regions from source 22 to face 38, and onward towards face 40, striking the interior walls 34 enroute with substantial energies such as 10 to 100 electron volts. The range of energy values is adjustable with potential source 42. A sequence of cascading impacts takes place, which will be described below in detail, which removes hydrogen ions from the absorbed molecules, and allows hydrogen ions to move in the open cylinders 33 towards face 38, while at the same time allows negatively-charged hydrocarbon ions to move in the open cylinders 33 towards face 40. Subsequent impact of these hydrocarbon ions with other similar charged or neutral species causes combination into larger hydrocarbon molecules, which emerge from face 40 and are pumped away into outlet 28. Concurrently, the extracted hydrogen ions are carried by the electric field past face 38 where they combine with others of the same species and are pumped away into outlet 29. Some of the inlet methane will pass, by diffusion, directly into outlet port 28 and will be separated in subsequent condensation stages from the heavier hydrocarbon molecules formed by the device operation, after which the methane may be recirculated back into the inlet stream which feeds port 27.

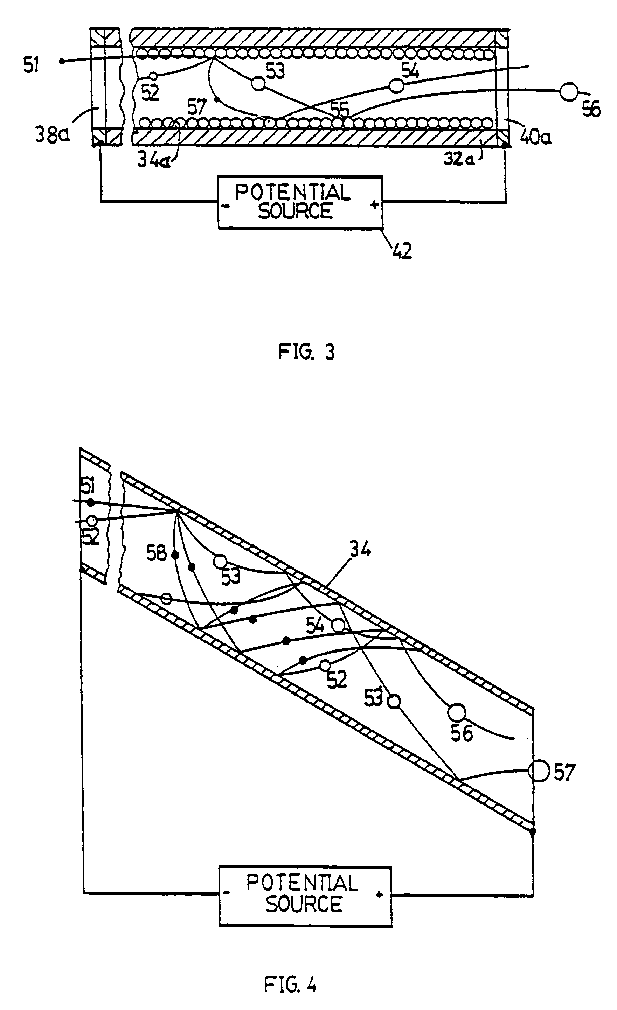

To further elaborate upon the details of the separation and recombination mechanism, with reference to Figure 3, the methane molecules 55 may be considered to be absorbed upon the interior walls 34 in a strong, chemi-sorbed bond with silica or alumina, which pertains to a surface monolayer, and also in a weaker, multi-molecular-layer bond for additional molecules. When interior wall 34 is struck by an incident electron 51 with energy in the range 10 to 100 electron volts, a variety of processes are initiated. Some of the incident electron 51 energy goes to create secondary electrons 57 which are emitted from the wall 34 and which are accelerated in parabolic trajectories to perpetuate the process at the next impact with wall 34. Some of the incident electron 51 energy goes to separate a positive hydrogen ion 52 from an absorbed gas molecule 55, also creating a negatively-charged hydrocarbon ion 53, for example CH₃ or CH₂. Some of the incident electron 51 energy imparts sufficient kinetic energy to these ions 52 and 53 so that they depart from their surface creation site and are accelerated along the electric field direction, in parabolic paths. The hydrogen ion 52 will subsequently strike the wall 34 with sufficient energy to create secondary electrons which will contribute to the electron cascade required for the process; this is a positive ion feedback effect. The same impact of hydrogen ion 52 on wall 34 will also provide sufficient energy to disrupt the bonding of one or several gas molecules 55 absorbed at that site, thus creating more positive hydrogen ions and negative hydrocarbon ions which are released from that site and which are accelerated in opposite directions along the electric field direction, thus contributing to the process. The hydrocarbon ion 53, acquiring kinetic energy along it's parabolic path, strikes the wall 34 with energy sufficient to disrupt bonds of molecules 55 at the site of impact, permitting the formation of a carbon-carbon bond at that site, and thus the creation of a higher weight hydrocarbon molecule 56, which is shown in a negatively-charged ion state in Figure 3 as it emerges from face 40 of the tube. At the site of formation of the carbon-carbon bond, other processes such as secondary electron production, and hydrogen ion production also may be expected to take place. In some cases, the higher-weight hydrocarbon may not leave the wall 34 immediately upon creation but will be dislodged by a subsequent electron or ion impact. The net trend of these processes may be summarized by noting that (a) electron and ion kinetic energy is applied to the surface zone where the hydrocarbon molecules are absorbed; (b) rupture of at least one of the hydrocarbon bonds leads to a species separation by means of the electric field; (c) the arrival of an energetic hydrocarbon ion at the surface zone further disrupts absorbed molecules and causes them to form carbon-carbon bonds; (d) higher weight molecules are moved, as ions, in a direction opposite that of the excess hydrogen, to the end of the device where they are pumped out.

Replenishment of methane molecules 55 on the surface will take place rapidly by diffusion and deposition from the gas phase present in the tube. Some degree of interaction between charged particles and neutral molecules in the volume space of the tube will also take place, with charge-separation and species separation trends as described for the walls 34, further enhancing the process.

The proper amount of charge required for electron current conservation at each impact site is provided by a small current flowing in a semiconducting layer just a few hundred Angstroms, or less, beneath the surface 34. Such a layer is easily formed by a prior high-temperature hydrogen reduction treatment of a lead-oxide aluminosilicate glass, for example.

The parabolic paths of the electrons and of the ions, as described above, have a length which depends upon the electric field strength and also upon the initial kinetic energy of the particles and their direction of emission from the surface. Inasmuch as the impact-creation of these charged particles involves the combination of many random processes within the wall 34, the direction and initial kinetic energy of the particles will follow a statistical distribution function. Some of these particles will follow trajectories which are very long, enabling them to acquire hundreds of electron volts of kinetic energy. This may lead to complete removal of hydrogen upon impact, with deposition of elemental carbon. Although this may be removed by subsequent impacts, it would be useful to contrive both a lower and an upper limit upon the range of impact energies, and for this reason the geometry of inclined channel axes as shown in Fig. 4 will be discussed.

With reference to Fig. 4, an angle is introduced between the electric field and the tube axis, by preparing the bundle of tubes and then slicing the bundle at such an angle. Molecules 55 are not shown in Fig. 4 for purposes of reducing complexity, but are present along the wall 34. Impact of electron 51 creates hydrogen ion 52, hydrocarbon ion 53, and secondary electrons 58. Since there is an angle between electric field and tubular axis the length of the parabolic paths is sharply limited. For example, if the electric field is 10 volts per diameter, path lengths of three diameters or less, with resulting impact energies of 30 electron volts or less can be arranged. Many more impacts along the length are thus possible, creating larger molecular ions 57 and 56. The length of these tubes may extend from 10 diameters to 1000 diameters or more, and the combination of angle, electric field strength, length/diameter ratio, and total length can be chosen to optimize the conversion process in each particular case, depending upon input molecular species, flow rates, and desired spectrum of output molecular species,

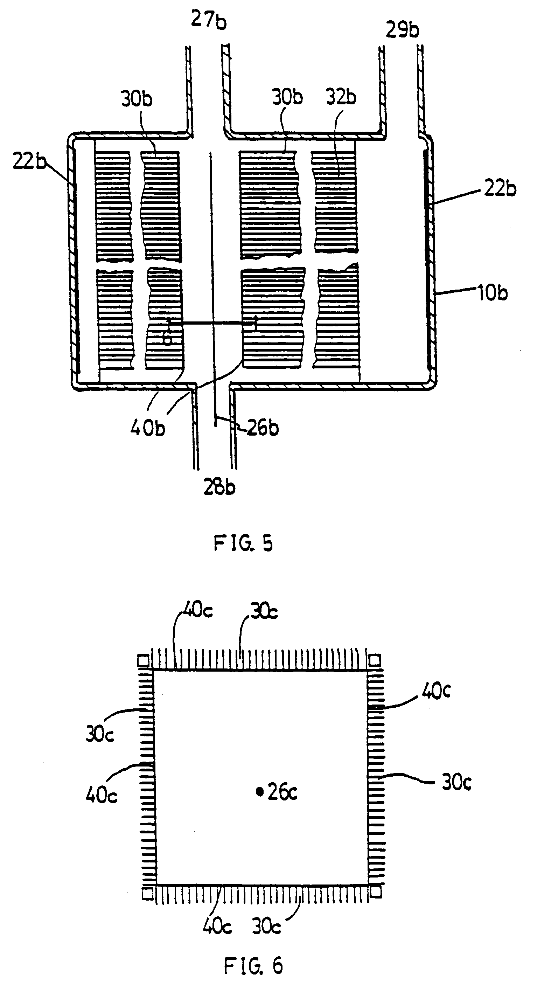

Various geometries can be utilized to expose an input molecular stream to many millions of the electrical reaction tubes. One possible configuration is illustrated in Figure 5, where the plurality 30 of tubular elements 32 are disposed facing a central core region, with the most positive electrode 26 in the form of a rod at the center of the core region. The quad symmetry of this axial flow reactor is shown also in Figure 6, which illustrates that the electrode 26 provides the electric field to draw the larger negatively-charged molecules from the tubular elements exit surface electrodes 40. The potential sources 42, 44, 45 have deliberately been omitted from Figures 5 and 6 in the interest of drawing clarity, but are nonetheless essential to the operation and are connected as mentioned above. Inlet molecules from port 27 are converted in tubular elements 32 and higher-weight molecules are extracted at port 28, with hydrogen extracted at port 29. The flow of gas from inlet port 27 to outlet port 28 can be augmented by a magnetic field if desired to force converted charged molecules towards port 28. In that case, one configuration could be a magnetic field of cylindrical symmetry which would be produced by a large current in the rod 26, which would in such an instance penetrate the chamber wall 10 in two locations and which would be attached to a suitable current source. In accordance with well-known principles, the magnetic force on the charged particles would be in the direction of the axial flow. Such a magnetic field would also extend into the tubular elements 32 where it would increase the number of collisions of charged particles with the walls and in certain circumstances improve the conversion efficiency.

## Claims

1. An apparatus for converting a gas containing molecules having a first molecular weight into a gas containing molecules having a second molecular weight comprising
a reaction chamber (10) having a gas inlet (27) and at least one gas outlet (28,29);
CHARACTERIZED in that the reaction chamber contains
- at least one array (30) of reaction tubes of insulating material (32) each tube having
i) a first and a second open end,
ii) an interior surface (34) exposed to said molecules having a first molecular weight, and having secondary electron emitting properties comprising a zone of semiconducting material just beneath it, and
iii) a longitudinal axis,
said reaction tubes being disposed substantially in parallel with each other in such way that the first and second ends of said tubes define a first and a second face of the array, respectively;
- a first electrode (38) arranged on the first face of the array and connected to the semiconducting layers at the first ends of the reaction tubes;
- a second electrode (40) arranged on the second face of the array and connected to the semiconducting layers at the second ends of the reaction tubes;
and that the apparatus further comprises
- a first external electric potential source (42) comprising
i) a first terminal connected to the first electrode (38) of the array (30), and
ii) a second terminal connected to the second electrode (40) of the array (30); and
- an electron source located at or adjacent to at least one of the electrodes (38,40).

2. An apparatus as claimed in claim 1, CHARACTERIZED in that the first external electric potential source (42) is a dc source, the first terminal thereof being negative and the second terminal thereof being positive, and that the apparatus further comprises
- a third electrode (22) placed adjacent to the first electrode (38) of the array (30) and functioning as an electron source; and
- a second external electric potential source (45) comprising
i) a first terminal connected to the electrode (22), and
ii) a second terminal connected to the first electrode (38) of the array (30),
to ensure a voltage difference between the third and the first electrode in order to accelerate electrons during their passage from the third to the first electrode.

3. An apparatus as claimed in claim 1, CHARACTERIZED in that the first external electric potential source (42) has a time-varying component and an additional static component, and that the apparatus further comprises
- a third electrode (22) placed adjacent to the first electrode (38) of the array (30) and functioning as an electron source; and
- a second external electric potential source (45) comprising
i) a first terminal connected to the electrode (22), and
ii) a second terminal connected to the first electrode (38) of the array (30),
to ensure a voltage difference between the third and the first electrode in order to accelerate electrons during their passage from the third to the first electrode.

4. An apparatus according to claims 1-3, CHARACTERIZED in that it further comprises:
- a fourth electrode (26) placed adjacent to the second electrode (40) of the array (30), and
- a third external electric potential source (44) comprising
i) a first terminal connected to the fourth electrode (26), and
ii) a second terminal connected to the second electrode (40) of the array (30).

5. An apparatus according to claims 1-4, CHARACTERIZED in that the first and the second face of the array are substantially planar.

6. An apparatus according to claim 5, CHARACTERIZED in that the third electrode is arranged substantially in parallel with the first electrode.

7. An apparatus according to claim 5, CHARACTERIZED in that the fourth electrode is arranged substantially in parallel with the second electrode.

8. An apparatus according to claims 2-7, CHARACTERIZED in that the second external electric potential source (45) is a dc source, the first terminal thereof being negative and the second terminal thereof being positive.

9. An apparatus according to claims 1-8, CHARACTERIZED in that it has one array of reaction tubes, and a first and a second gas outlet (28,29); the gas inlet (27) and the first gas outlet (28) being located adjacent to the second face of the array; and the second gas outlet (29) being located adjacent to the first face of the array.

10. An apparatus according to claims 1-8, CHARACTERIZED in that it has at least two arrays of reaction tubes, that each of said arrays has a longitudinal axis, and that said arrays are disposed around a central axis such that the longitudinal axes of said arrays are directed orthogonally towards said central axis.

11. An apparatus according to claim 10, CHARACTERIZED in that it includes a linear electrode (26 b,c) located near said central axis and a third external electric potential source having a first terminal connected to the linear electrode and a second terminal being connected to the second electrodes of the arrays.

12. An apparatus according to claims 1-11, CHARACTERIZED in that the third electrode (22) comprises a material having electron emission properties.

13. An apparatus according to claim 1, CHARACTERIZED in that the first external electric potential source has a time-varying component and a static component.

14. An apparatus according to claims 1-13, CHARACTERIZED in that the first and second face of the array/arrays define substantially parallel planes being disposed at an angle different from 90° with respect to the longitudinal axes of the reaction tubes in said array/arrays.

15. A method for conversion of a first substance having a first molecular weight into a second substance having a second molecular weight in a reaction zone comprising at least one array of reaction tubes having substantially parallel longitudinal axes, and having an interior surface exposed to said first substance, said interior surface having a semiconducting layer, comprising the steps of:
applying an electric field having a significant component parallel to the said longitudinal axes of said reaction tubes;
introducing said first substance into said reaction tubes, said first substance reacting in response to electrons accelerated by said applied electric field to create said second substance; and
collecting said second substance.

16. Method according to claim 15, CHARACTERIZED in that said first substance comprises a hydrocarbon.

## Patentansprüche

1. Vorrichtung zur Umwandlung eines Moleküle mit einem ersten Molekulargewicht enthaltenden Gases in ein Moleküle mit einem zweiten Molekulargewicht enthaltendes Gas, welche eine Reaktionskammer (10) mit einem Gaseinlaß (27) und mindestens einem Gasauslaß (28, 29) aufweist, dadurch gekennzeichnet, daß die Reaktionskammer
- mindestens eine Anordnung (30) von Reaktionsrohren aus Isoliermaterial (32) enthält, wobei jedes Rohr
(i) ein erstes und ein zweites offenes Ende,
(ii) eine innere Oberfläche (34), die den Molekülen mit einem ersten Molekulargewicht ausgesetzt ist und Sekundärelektronen-abgebende Eigenschaften hat und eine Zone aus Halbleitermaterial direkt darunter aufweist, und
(iii) eine Längsachse
hat, wobei die Reaktionsrohre im wesentlichen parallel zu einander so angeordnet sind, daß das erste und das zweite Ende der Rohre eine erste bzw. eine zweite Fläche der Anordnung festlegen,
- eine auf der ersten Fläche der Anordnung angeordnete Elektrode (38), die mit den Halbleiterschichten an den ersten Enden der Reaktionsröhren verbunden ist;
- eine auf der zweiten Fläche der Anordnung angeordnete zweite Elektrode (40), die mit den Halbleiterschichten an den zweiten Enden der Reaktionsröhren verbunden ist;
und daß die Vorrichtung weiters
- eine erste, äußere, elektrische Spannungsquelle (42) aufweist, welche
(i) einen ersten, mit der ersten Elektrode (38) der Anordnung (30) verbundenen Pol und
(ii) einen zweiten, mit der zweiten Elektrode (40) der Anordnung (30) verbundenen Pol und
- eine Elektronenquelle, die sich an oder neben mindestens einer der Elektroden (38, 40) befindet,
aufweist.

2. Vorrichtung nach Anspruch 1, dadurch gekennzeichnet, daß die erste äußere elektrische Spannungsquelle (42) eine Gleichstromquelle ist, deren erster Pol negativ und deren zweiter Pol positiv ist, und daß die Vorrichtung weiters
- eine dritte Elektrode (22), die neben der ersten Elektrode (38) der Anordnung (30) placiert ist und als Elektronenquelle fungiert, und
- eine zweite äußere elektrische Spannungsquelle (45) aufweist, welche
(i) einen ersten, mit der Elektrode (22) verbundenen Pol und
(ii) einen zweiten, mit der ersten Elektrode (38) der Anordnung (30) verbundenen Pol
aufweist, um eine Spannungsdifferenz zwischen der dritten und der ersten Elektrode zu gewährleisten, um Elektronen während ihres Durchgangs von der dritten zur ersten Elektrode zu beschleunigen.

3. Vorrichtung nach Anspruch 1, dadurch gekennzeichnet, daß die erste äußere elektrische Spannungsquelle (42) eine mit der Zeit. variierende Komponente und eine zusätzliche statische Komponente hat und daß die Vorrichtung weiters
- eine dritte Elektrode (22), die neben der ersten Elektrode (38) der Anordnung (30) placiert ist und als Elektronenquelle fungiert, und
- eine zweite äußere elektrische Spannungsquelle (45) aufweist, welche
(i) einen ersten, mit der Elektrode (22) verbundenen Pol und
(ii) einen zweiten, mit der ersten Elektrode (38) der Anordnung (30) verbundenen Pol
aufweist,
um eine Spannungsdifferenz zwischen der dritten und der ersten Elektrode zu gewährleisten, um Elektronen während ihres Durchgangs von der dritten zur ersten Elektrode zu beschleunigen.

4. Vorrichtung nach den Ansprüchen 1-3, dadurch gekennzeichnet, daß sie weiters
- eine vierte Elektrode (26), die neben der zweiten Elektrode (40) der Anordnung (30) placiert ist, und
- eine dritte äußere elektrische Spannungsquelle (44) aufweist. welche
(i) einen ersten, mit der vierten Elektrode (26) verbundenen Pol und
(ii) einen zweiten, mit der zweiten Elektrode (40) der Anordnung (30) verbundenen Pol
aufweist.

5. Vorrichtung nach den Ansprüchen 1-4, dadurch gekennzeichnet, daß die erste und die zweite Fläche der Anordnung im wesentlichen eben sind.

6. Vorrichtung nach Anspruch 5, dadurch gekennzeichnet, daß die dritte Elektrode im wesentlichen parallel zur ersten Elektrode angeordnet ist.

7. Vorrichtung nach Anspruch 5, dadurch gekennzeichnet, daß die vierte Elektrode im wesentlichen parallel zur zweiten Elektrode angeordnet ist.

8. Vorrichtung nach den Ansprüchen 2-7, dadurch gekennzeichnet, daß die zweite äußere elektrische Spannungsquelle (45) eine Gleichstromquelle ist, deren erster Pol negativ und deren zweiter Pol positiv ist.

9. Vorrichtung nach den Ansprüchen 1-8, dadurch gekennzeichnet, daß sie eine Anordnung von Reaktionsrohren und einen ersten und einen zweiten Gasauslaß (28, 29) hat; wobei der Gaseinlaß (27) und der erste Gasauslaß (28) neben der zweiten Fläche der Anordnung angeordnet sind; und der zweite Gasauslaß (29) sich neben der ersten Fläche der Anordnung befindet.

10. Vorrichtung nach den Ansprüchen 1-8, dadurch gekennzeichnet, daß sie mindestens zwei Anordnungen von Reaktionsrohren hat, daß jede der Anordnungen eine Längsachse hat und daß diese Anordnungen um eine Mittelachse so angeordnet sind, daß die Längsachsen dieser Anordnungen orthogonal zur zentralen Achse hin gerichtet sind.

11. Vorrichtung nach Anspruch 10, dadurch gekennzeichnet, daß sie eine lineare Elektrode (26 b, c) in der Nähe der Mittelachse und eine dritte äußere elektrische Spannungsquelle mit einem ersten Pol, der mit der linearen Elektrode verbunden ist, und einem zweiten Pol, der mit den zweiten Elektroden der Anordnungen verbunden ist, beinhaltet.

12. Vorrichtung nach den Ansprüchen 1-11, dadurch gekennzeichnet, daß die dritte Elektrode (22) ein Material mit Elektronenemissionseigenschaften aufweist.

13. Vorrichtung nach Anspruch 1, dadurch gekennzeichnet, daß die erste äußere elektrische Spannungsquelle eine mit der Zeit variierende Komponente und eine statische Komponente hat.

14. Vorrichtung nach den Ansprüchen 1-13, dadurch gekennzeichnet, daß die erste und die zweite Fläche der Anordnung(en) im wesentlichen parallele Ebenen festlegen, die sich in einem Winkel befinden, der in bezug auf die Längsachsen der Reaktionsröhren in dieser Anordnung (diesen Anordnungen) nicht 90° ist.

15. Verfahren zur Umwandlung einer ersten Substanz mit einem ersten Molekulargewicht in eine zweite Substanz mit einem zweiten Molekulargewicht in einer Reaktionszone, welche mindestens eine Anordnung von Reaktionsrohren mit im wesentlichen parallelen Längsachsen aufweist, die eine der ersten Substanz ausgesetzte innere Oberfläche haben, wobei diese innere Oberfläche eine Halbleiterschicht hat, und welches die folgenden Schritte aufweist:
Anlegen eines elektrischen Feldes mit einer signifikanten Komponente parallel zu den Längsachsen der Reaktionsrohre;
Einbringen der ersten Substanz in diese Reaktionsrohre, wobei die erste Substanz auf Elektronen, die durch das angelegte elektrische Feld beschleunigt sind, reagiert, um die zweite Substanz zu bilden; und
Sammeln der zweiten Substanz.

16. Verfahren nach Anspruch 15, dadurch gekennzeichnet, daß die erste Substanz einen Kohlenwasserstoff enthält.

## Revendications

1. Appareil de conversion d'un gaz contenant des molécules ayant un premier poids moléculaire en un gaz contenant des molécules ayant un deuxième poids moléculaire, comprenant :
une chambre de réaction (10), ayant une entrée de gaz (27) et au moins une sortie de gaz (28, 29);
caractérisé en ce que la chambre de réaction contient :
- au moins un domaine (30) de tubes de réaction en matière isolante (32), chaque tube ayant :
(i) une première et une deuxième extrémité ouverte;
(ii) une surface intérieure (34) exposée aux molécules ayant un premier poids moléculaire et ayant des propriétés secondaires d'émission d'électrons, comprenant une zone d'une matière semi-conductrice juste en dessous d'elle, et
(iii) un axe longitudinal;
les tubes de réaction étant disposés sensiblement parallèles l'un par rapport à l'autre, de sorte que les première et deuxième extrémités de chaque tube définissent une première et deuxième face du domaine, respectivement;
- une première électrode (38), placée sur la première face du domaine et connectée aux couches semi-conductrices des premières extrémités des tubes de réaction;
- une deuxième électrode (40), placée sur la deuxième face du domaine et connectée aux couches semi-conductrices des deuxièmes extrémités des tubes de réaction;
et l'appareil comprend de plus :
- une première source d'énergie électrique externe (42), comprenant :
(i) une première borne connectée à la première électrode (38) du domaine (30), et
(ii) une deuxième borne connectée à la deuxième électrode (40) du domaine (30), et
- une source d'électrons, placée sur ou de manière adjacente à au moins une des électrodes (38, 40).

2. Appareil suivant la revendication 1, caractérisé en ce que la première source d'énergie électrique externe (42) est une source de courant discontinu, la première borne de celle-ci étant négative et la deuxième borne de celle-ci étant positive et en ce que l'appareil comprend de plus :
- une troisième électrode (22), placée de manière adjacente à la première électrode (38) du domaine (30) et fonctionnant comme source d'électrons, et
- une deuxième source d'énergie électrique externe (45), comprenant :
(i) une première borne connectée à l'électrode (22), et
(ii) une deuxième borne connectée à la première électrode (38) du domaine (30);
pour assurer une différence de potentiel entre la troisième et la première électrode, afin d'accélérer les électrons pendant leur passage de la troisième à la première électrode.

3. Appareil suivant la revendication 1, caractérisé en ce que la première source d'énergie électrique externe (42) possède un composant variant dans le temps et un composant statique supplémentaire et en ce que l'appareil comprend de plus :
- une troisième électrode (22), placée de manière adjacente à la première électrode (38) du domaine (30) et fonctionnant comme source d'électrons, et
- une deuxième source d'énergie électrique externe (45), comprenant :
(i) une première borne connectée à l'électrode (22), et
(ii) une deuxième borne connectée à la première électrode (38) du domaine (30);
pour assurer une différence de potentiel entre la troisième et la première électrode, afin d'accélérer les électrons pendant leur passage de la troisième à la première électrode.

4. Appareil suivant les revendications 1 à 3, caractérisé en ce qu'il comprend de plus :
- une quatrième électrode (26), placée de manière adjacente à la deuxième électrode (40) dans le domaine (30), et
- une troisième source d'énergie électrique externe (44), comprenant :
(i) une première borne connectée à la quatrième électrode (26), et
(ii) une deuxième borne connectée à la deuxième électrode (40) du domaine (30).

5. Appareil suivant les revendications 1 à 4, caractérisé en ce que la première et la deuxième face du domaine sont sensiblement planes.

6. Appareil suivant la revendication 5, caractérisé en ce que la troisième électrode est placée sensiblement parallèle à la première électrode.

7. Appareil suivant la revendication 5, caractérisé en ce que la quatrième électrode est placée sensiblement parallèle à la deuxième électrode.

8. Appareil suivant les revendications 2 à 7, caractérisé en ce que la deuxième source d'énergie électrique externe est une source de courant discontinu, la première borne de celle-ci étant négative et la deuxième borne de celle-ci étant positive.

9. Appareil suivant les revendications 1 à 8, caractérisé en ce qu'il possède un domaine de tubes de réaction et une première et une deuxième sortie de gaz (28, 29); l'entrée de gaz (27) et la première sortie de gaz (28) étant placées de manière adjacente à la deuxième face du domaine et, la deuxième sortie de gaz (29) étant placée de manière adjacente à la première face du domaine.

10. Appareil suivant les revendications 1 à 8, caractérisé en ce qu'il possède au moins deux domaines de tubes de réaction, que chacun de ces domaines possède un axe longitudinal et que les domaines sont disposés autour d'un axe central, de sorte que les axes longitudinaux des domaines soient dirigés orthogonalement par rapport à l'axe central.

11. Appareil suivant la revendication 10, caractérisé en ce qu'il comprend une électrode linéaire (26b,c) placée près de l'axe central et une troisième source d'énergie électrique externe, ayant une première borne connectée à l'électrode linéaire et une deuxième borne connectée aux deuxièmes électrodes des domaines.

12. Appareil suivant les revendications 1 à 11, caractérisé en ce que la troisième électrode (22) comprend une matière ayant des propriétés d'émission d'électrons.

13. Appareil suivant la revendication 1, caractérisé en ce que la première source d'énergie électrique externe possède un composant variant dans le temps et un composant statique.

14. Appareil suivant les revendications 1 à 13, caractérisé en ce que la première et la deuxième face du ou des domaines définissent des plans sensiblement parallèles, placés à un angle différant de 90° par rapport aux axes longitudinaux des tubes de réaction du ou des domaines.

15. Procédé de conversion d'une première substance ayant un premier poids moléculaire en une deuxième substance ayant un deuxième poids moléculaire, dans une zone de réaction comprenant au moins un domaine de tubes de réaction ayant des axes longitudinaux sensiblement parallèles et ayant une surface intérieure exposée à la première substance, la surface intérieure ayant une couche semi-conductrice, comprenant les étapes de :
application d'un champ électrique ayant une composante significative parallèle aux axes longitudinaux des tubes de réaction;
introduction d'une première substance dans les tubes de réaction, la première substance réagissant en réponse aux électrons accélérés par le champ électrique appliqué pour créer la deuxième substance, et
récolte de la deuxième substance.

16. Procédé suivant la revendication 15, caractérisé en ce que la première substance comprend un hydrocarbure.
